# EUROPÄISCHE PATENTSCHRIFT

(11) **EP 1 889 739 B1**
(45) Veröffentlichungstag und Bekanntmachung des Hinweises auf die Patenterteilung: **19.01.2011**
(21) Anmeldenummer: 07110857.5
(22) Anmeldetag: 22.06.2007
(51) Int. Cl.: B60J 7/22

(54) **Verfahren zur Herstellung eines Schottrahmens sowie Schott**
Method for manufacturing a wind deflector and wind deflector
Procédé de fabrication d'un déflecteur d'air et déflecteur d'air

(30) Priorität: 22.06.2006 DE 102006029135
(43) Veröffentlichungstag der Anmeldung: 20.02.2008
(73) Patentinhaber: FKT GmbH, 85104 Pförring (DE); Körber, Stefan, 85092 Kösching (DE)
(72) Erfinder: Ortel, Andreas, 92334, Berching (DE); Körber, Stefan, 85092, Kösching (DE)
(74) Vertreter: Schlief, Thomas P.

(56) Entgegenhaltungen:
- EP-A- 1 134 107
- DE-A1- 4 446 764
- DE-A1- 10 038 714
- DE-A1- 10 341 989
- DE-A1- 19 502 793
- GB-A- 2 415 971
- US-A- 3 850 534
- US-A1- 2003 085 006
- US-B1- 6 352 300

## Beschreibung

Die vorliegende Erfindung betrifft ein Verfahren zur Herstellung eines Schottrahmens sowie ein Schott für ein Personenkraftfahrzeug.

Schotts für Personenkraftfahrzeuge sind insbesondere als Windschotts im Stand der Technik in verschiedenen Ausführungen bekannt. Insbesondere bei einer speziellen Art, wie sie z.B. in der DE 196 16 448 A1 und der DE 100 38 714 A1 beschrieben ist, weist das Windschott eine Abdeckung auf, die derart an dem Personenkraftfahrzeug montiert wird, dass durch sie der Rücksitzinnenraum des Personenkraftfahrzeuges nach außen hin abgedeckt ist. Der Windschottrahmen ist vornehmlich aus Aluminium-Hohlprofilen gefertigt, die miteinander verklebt und/oder verschraubt sind, und schwenkbar an der Abdeckung angeordnet. Dieser Rahmen spannt in Gebrauchsstellung eine Flachmaterialbahn direkt hinter den Lehnen der Vordersitze, um die Insassen auf den Vordersitzen vor unangenehmen Luftströmungen zu schützen. Die Abdeckung dient zugleich der Befestigung der Windschotteinrichtung in dem Fahrzeug. Nachteilig bei diesen bekannten Schotts ist, dass ihre Fertigung aufwendig und kostenintensiv ist.

Es ist Aufgabe der vorliegenden Erfindung, ein Schott für ein Personenkraftfahrzeug sowie ein Verfahren zur Herstellung eines Schotts mit deutlich reduzierten Kosten und einfacherem Aufbau vorzustellen.

Diese Aufgabe wird durch die Merkmale der unabhängigen Ansprüche gelöst.

Das erfindungsgemäße Verfahren zur Herstellung eines Schotts für ein Personenkraftfahrzeug umfasst die Verfahrensschritte, dass zunächst Profilelemente mit Steckabschnitten in hohle Profilelemente eingeschoben werden und anschließend maschinell vom Umfang her Energie eingebracht wird, um die Profilelemente miteinander zu verbinden. Hierbei wird mindestens ein außen liegender Abschnitt eines im Wesentlichen aus Metall bestehenden hohlen Profilelements von der Umfangsseite her bzw. von außen derart eingedrückt, dass hierdurch mindestens eine lokale plastische Verformung im umgreifenden Abschnitt unter Bildung mindestens einer Einbuchtung entsteht, die mit dem eingeschobenen Steckabschnitt zusammenwirkt, vorteilhafterweise formschlüssig und weiter vorteilhaft in einer verzahnenden Anordnung. Hierbei bildet sich vorzugsweise ein Formschluss und weiter vorteilhaft eine Verzahnung aus. Es wird eine unter üblicher Belastung zugfeste Verbindung zwischen den Profilelementen erhalten.

Eine Verzahnung kann dadurch entstehen, dass die Einbuchtungen zwischen umfangseitige Erhebungen der Fortsätze eingreifen, wobei die Erhebungen beispielsweise in Form von in Längserstreckung beabstandeten Ringen bzw. Querrippen an den Steckabschnitten des eingesteckten Profilelements ausgebildet sind.

Die Einbuchtungen werden vorzugsweise dort erzeugt, wo sie nicht sichtbar sind. Hier bietet sich eine Hohlrinne in dem hohlen Profilelement an, in welche die Pressstempel zum Erzeugen der Einbuchtungen eingeführt werden können. Durch den Abschluss einer anschließend in die Hohlrinne einzupressenden Kunststofflippe sind die Fertigungsstellen im fertigen Schott im Wesentlichen nicht mehr sichtbar.

Die genannte Kunststofflippe besteht bevorzugt aus einem elastischen Kunststoff und ist mit einem verbreiterten, unten angeformten Ende, das geringfügig breiter ist als der Eingangsöffnungsquerschnitt der Hohlrinne, in der Hohlrinne gehalten. Alternativ oder zusätzlich weist die Kunststofflippe längslaufende Widerhaken auf, die in entsprechende Längszacken in der Hohlrinne eingreifen. Hierdurch wird ein sicherer Sitz der Kunststofflippe in den Hohlrinnen gewährleistet.

Es ist auch ohne weiteres ebenfalls möglich, die gewünschten plastischen Verformungen an anderen umfangseitigen Stellen der Hohlraumprofilelemente zu erzeugen.

Ein besonders einfaches Verfahren zur Herstellung eines Schotts zeichnet sich dadurch aus, dass das Schott aus Profilelementen - vorzugsweise per Hand - zusammengesteckt wird, das Schott in eine Aufnahme eines Montagetisches eingelegt wird und zumindest mehrere der gesteckten Profilelemente in einem Arbeitsgang an ihren Steckverbindungen erfindungsgemäß miteinander verbunden werden. Ist das Schott aus mehreren Teilrahmen aufgebaut - ähnlich wie in den vorgenannten Druckschriften DE 196 16 448 A1 und der DE 100 38 714 A1 beschrieben - ist für jedes dieser Teilrahmen eine entsprechende Aufnahme vorgesehen.

Die Erfindung umfasst auch ein Schott für ein Personenkraftfahrzeug nach Anspruch 5, das insbesondere nach dem vorgenannten Verfahren hergestellt sein kann. Insbesondere ist es hier von Vorteil, wenn die Einbuchtungen zwischen umfangseitige Erhebungen des Steckabschnitts des umgriffenen Profilelements eingreifen.

Vorteilhafterweise sind das hohle Profilelement als auch der Steckabschnitt des anderen Profilelements zumindest in deren Verbindungsbereich miteinander korrespondierend U-förmig ausgebildet, wobei die Einbuchtungen in den Senken bzw. im unteren Wandschenkel dieser U-förmigen Bereiche vorgesehen sind. Die Verbindungsstellen zwischen den beiden Profilelementen sind hierdurch unscheinbar und wirken nicht störend.

Zur noch weiter gehenden optischen Abdeckung der Verbindungsbereiche bzw. der Einbuchtungen in den Hohlrinnen ist vorzugsweise eine Kunststofflippe in ineinander übergehende Hohlrinnen der beiden miteinander verbundenen Profilelemente eingebracht. Hierdurch werden auch evtl. vorhandene kleinere Fugen überdeckt. Außerdem entsteht ein geschlossener optischer Eindruck.

Gemäß einer vorteilhaften Ausführungsform weist ein gebogenes Eckprofil einen Steckabschnitt auf, der mit einem hohlen Linearprofil versteckt sowie verschweißt bzw. verpresst ist.

Gemäß einer vorteilhaften Alternative sind die die vorstehenden Steckabschnitte aufweisenden Profilelemente als dübelartige Steckverbinder, die zwei hohle Profilelemente miteinander verbinden.

Ein solcher Steckverbinder zeichnet sich dadurch aus, dass er eine ausschließlich lineare Längserstreckung besitzt und an seinen beiden Stirnseiten je einen einteilig angeformten Steckabschnitt bzw. Fortsatz aufweist zum Einschieben in ein hohles Ende eines Profilelements des Schotts. Ein solcher Steckverbinder ist also wie ein doppelter Dübel (ähnlich einem Holzdübel) aufgebaut.

Der erfindungsgemäße Steckverbinder ist gemäß einer bevorzugten Ausführungsform im Wesentlichen aus Kunststoff hergestellt, wobei sich hier ein Spritzgussverfahren anbietet.

Bei einer vorteilhaften Alternative besteht der Steckverbinder im Wesentlichen aus Metall und hierbei vorzugsweise aus Aluminium oder Stahl oder einer Legierung. Ein solcher Steckverbinder hat den Vorteil einer großen Steifigkeit.

Ein vorteilhafter Steckverbinder zeichnet sich dadurch aus, dass die Fortsätze umfangseitig Erhebungen aufweisen, die als Rippen ausgebildet sind. Diese sind vorzugsweise in Längserstreckung der Fortsätze als Querrippen voneinander beabstandet angeordnet, so dass sie über eine relativ große Strecke Halt im Hohlprofilelement gewährleisten.

Gemäß einer Alternative weisen die Fortsätze umfangseitig mindestens eine Erhebung auf, die als Clips ausgebildet ist. Der mindestens eine Clips ist federnd in eine entsprechende Ausnehmung am hohlen Ende des Profilelements einclipsbar, um auf diese Weise einen sicheren Sitz des Steckverbinders zu erhalten.

Bei einer weiteren Alternative weisen die Fortsätze umfangseitig mindestens eine Erhebung auf, die als elastisches Kunststoffteil ausgebildet ist. Vorzugsweise sind mehrere über den Umfang angeordnete Kunststoffteile vorgesehen, um eine große Anlagefläche mit dem Hohlprofilelement zu erreichen. Diese Kunststoffteile dienen beim Einstecken vorzugsweise als gummierte bzw. elastische Verpressflächen und sind beispielsweise im 2-Komponenten-Spritzgussverfahren oder separat gefertigt und in Tüllenform vormontiert. Sie können sowohl auf Kunststoff als auch auf Metall (Aluminium, Stahl, etc.) als Steckverbindermaterial aufgebracht, beispielsweise angespritzt, werden. Weiterhin ist bei dieser Ausführungsform ein elastischer Kunststoffring an der Stoßkante zum Profilelement angeordnet, der als Relaxierbereich dient. Beim Aufstecken wird der Steckverbinder gegen diesen Ring überdrückt, da sich der Steckverbinder wegen der gummierten bzw. elastischen Erhebungen teilweise zurückzieht und ohne den Relaxierbereich ein Spalt entstehen würde.

Die elastischen Kunststoffteile können beispielsweise flächig ausgebildet sein. Gemäß einer Alternative sind sie als Längsrippen in Steckrichtung der Steckverbinder ausgebildet.

Bevorzugt weisen die Fortsätze des Steckverbinders einen gebogenen Querschnitt mit konkavem Profil und hierbei vorzugsweise einem U-Profil auf, der sich in Längserstreckung bzw. in Einschubrichtung des Steckabschnitts erstreckt. Dieser Querschnitt ist dem Hohlprofil bzw. der Hohlrinne der zugehörigen Profilelemente angepasst, in welche die Steckverbinder eingeschoben werden.

Eine vorteilhafte Variante des Steckverbinders ist mit einem Mittelabschnitt versehen, der nach dem beidseitigen Aufstecken von Profilelementen noch sichtbar ist. Dieser Mittelabschnitt weist bei einer vorteilhaften Ausführungsform umfangseitig ein elastisches Element auf, das an den Grundkörper des Steckverbinders angespritzt oder als separates Bauteil auf den Grundkörper aufgeclipst ist. Besonders bevorzugt liegt der Mittelabschnitt bzw. das elastische Element an beiden Seiten an den Stirnkanten der freien Enden der Profilelemente an und sorgt wegen seinen elastischen Eigenschaften für einen Toleranzausgleich sowie für einen gleichmäßigen Fugenverlauf.

In dem besagten Mittelabschnitt ist bevorzugt eine Hohlrinne vorgesehen. Diese fluchtet bevorzugtermaßen mit dem besagten konkaven Abschnitt des Steckabschnitts.

Wenn das bzw. die erfindungsgemäßen Schotts als Windschott ausgebildet sind, zeichnet sich eine bevorzugte Ausführungsform dadurch aus, dass eine Abdeckung umfasst ist, die schwenkbar mit dem besagten (Windschott-) Rahmen verbunden ist, und zum Abdecken eines Teilbereichs einer Fahrgastraumöffnung des Personenkraftfahrzeuges dient, wobei die Abdeckung ebenfalls einen Rahmen - im Folgenden zweiter Rahmen genannt - aufweist, in dem eine Flachmaterialbahn angeordnet ist. Diese Ausführung entspricht im Wesentlichen derjenigen, wie sie in den oben genannten DE 196 16 448 A1 und der DE 100 38 714 A1 beschrieben sind. Hierbei sind sowohl der erste als auch der zweite Rahmen vorteilhafterweise mit den vorbeschriebenen Profilelementen aufgebaut.

Zwei hohle Profilelemente eines Schottrahmens, seien beide aus Aluminium oder eines aus Aluminium und eines aus Kunststoff, können mit jeweils mit einem Steckabschnitt eines Steckverbinders versteckt und erfindungsgemäß verbunden werden. Die Steckverbinder können insbesondere als länglicher Dübel gemäß dem oben beschriebenen Erfindungsaspekt ausgebildet sein oder beispielsweise als gebogenes Profilelement (Rahmeneckstück), das an beiden Enden entsprechende Steckabschnitte aufweist, auf die bevorzugt lineare Hohlprofilelemente aufgesteckt werden.

Auch ist von der Erfindung ein Schott mitumfasst, das mindestens einen der erfindungsgemäßen Steckverbinder aufweist. Die länglichen hohlen Profilelemente - unabhängig, ob sie linear oder gebogen ausgeführt sind - bestehen hierbei aus Metall, beispielsweise Aluminium, Stahl oder einer Legierung. Das erfindungsgemäße Verfahren der mechanischen Verpressung bedingt die Materialwahl Metall.

Vorteilhafte Weiterbildungen der Erfindung sind durch die Merkmale der Unteransprüche gekennzeichnet.

Im Folgenden wird ein Ausführungsbeispiel der Erfindung anhand der Figuren näher beschrieben. Es zeigen:
- **Figur 1**: ein Windschott in Einbauposition in einem Fahrzeug in einer Ansicht von vorne;
- **Figur 2**: eine Aufsicht auf ein Windschott mit drei Rahmen;
- **Figur 3**: ein lineares hohles Profilelement in perspektivischer Ansicht;
- **Figur 4**: eine erste Ausführungsform eines Steckverbinders;
- **Figur 5**: eine zweite Ausführungsform eines Steckverbinders, mit sichtbarem Mittelabschnitt;
- **Figur 6**: ein Eckprofil mit zwei stirnseitigen Steckverbindern;
- **Figur 7**: zwei aneinander angrenzende lineare hohle Profilelemente, verbunden mit einem Steckverbinder;
- **Figur 8**: ein Eckprofil mit angeformten Steckabschnitten zum Einste- cken in ein lineares hohles Profilelement, und
- **Figur 9**: einen Ausschnitt eines Profilelements und eines Steckverb- inders, die erfindungsgemäß miteinander verbunden werden.

Das Windschott 1 umfasst eine Abdeckung 2, welche einerseits der Befestigung des Windschotts in dem Fahrzeug dient, andererseits einen Teilbereich einer Fahrgastraumöffnung des Personenkraftfahrzeuges abdeckt. An der Abdeckung 2 ist um eine Schwenkachse 5 der ebenfalls zum Windschott 1 gehörende Windschottrahmen 6 schwenkbar angeordnet.

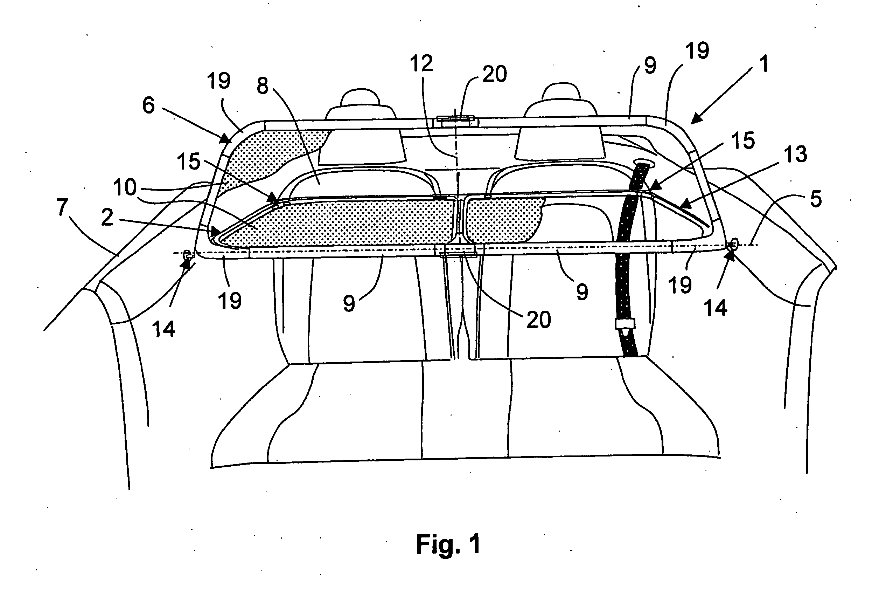

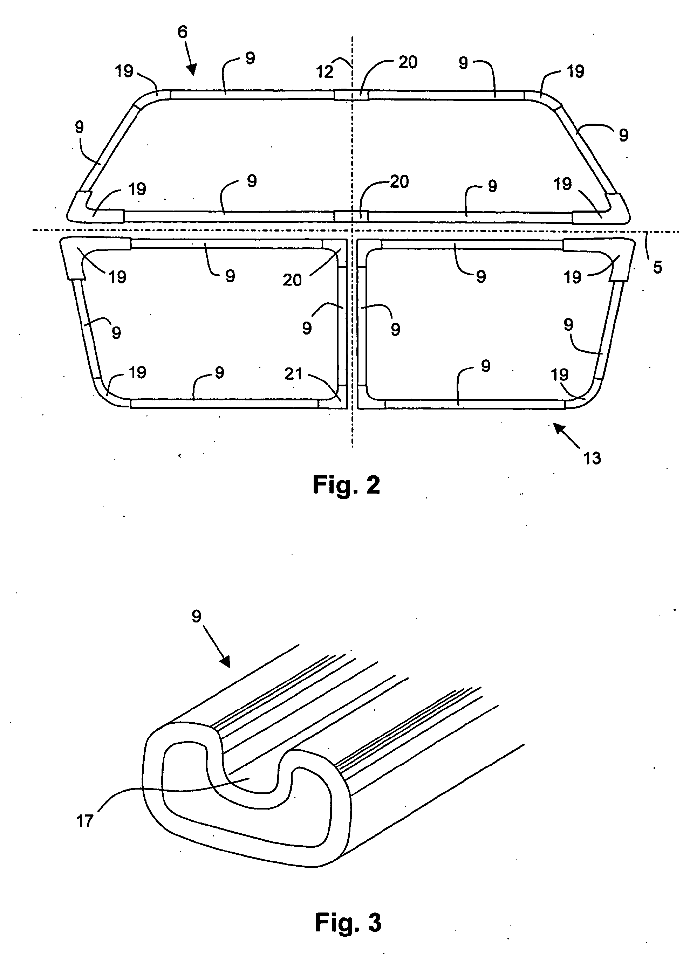

Wie in den Figuren 1 und 2 angedeutet und im Folgenden ausgeführt, besteht der Windschottrahmen 6 sowie der Rahmen 13 der Abdeckung 2 im Wesentlichen aus linearen hohlen Profilelementen (Hohlprofilelementen) 9 und gebogenen Profilelementen (Eckprofilelementen) 19 sowie ggf. als Steckverbindern ausgebildeten kurzen Profilelementen 30, 130.

Wie insbesondere der Figur 1 zu entnehmen ist, befindet sich der Windschottrahmen 6 aufgeklappt in Gebrauchsposition und erstreckt sich hierbei im Wesentlichen über die Breite des Insassenraumes, wobei er nahezu senkrecht hinter den hier nicht dargestellten Kopfstützen der Vordersitze positioniert ist.

Die horizontale Abdeckung 2 erstreckt sich im Wesentlichen parallel zu einer Gürtellinie 7 des Kraftfahrzeuges bis hin zu den Lehnen der Rücksitze 8. Der Raum unterhalb der Abdeckung 2 kann somit als Stauraum genutzt werden.

Der Windschottrahmen 6 sowie auch der Rahmen 13 der Abdeckung 2 sind weitgehend steif ausgebildet. An beiden Rahmen 8 bzw. 13 sind jeweils windabweisende Flachmaterialbahnen 10 aufgespannt, welche aus Gründen der Übersichtlichkeit zum Teil nur angedeutet sind. Die Flachmaterialbahnen 10 sind windabweisend ausgeführt, können jedoch auch aus einem luftdurchlässigen Material wie einem Netz oder Gewebe hergestellt sein.

Um das Windschott 1 bei Nichtgebrauch platzsparend verstauen zu können, weist zumindest der Rahmen 6 zwei Scharniere 20 auf, so dass das Windschott 1 - nach Anschwenken der Abdeckung 2 an den Rahmen 6 - um die Klappachse 12 zusammenklappbar ist. Der Rahmen 13 der Abdeckung 2 besteht hierzu aus zwei Teilen, welche an Eckscharnieren 21 gelenkig miteinander verbunden sind, so dass nach dem Anschwenken des Windschottrahmens 6 an die Abdeckung 2 beide Rahmen 6, 13 um die Klappachse 12 zusammengeklappt werden können. Die Scharniere 20 sind hierzu als Doppelgelenke ausgeführt, so dass in eingeklapptem Zustand die Abdeckung 2 zwischen den Teilen des Windschottrahmens 6 zu liegen kommt, s. hierzu auch die DE 196 16 448 A1 und die DE 100 38 714 A1. Ebenso ist es auch möglich, dass nur ein Teil der Abdeckung 2 mit dem Rahmen 6 fest verbunden ist, während der andere Teil der Abdeckung 2 lösbar mit dem Rahmen 6 verbunden ist. Auch hierdurch ist es möglich, das Windschott 1 auf ein sehr kleines Maß zusammenzufalten.

Zur Befestigung des Windschotts 1 in dem Fahrzeug weist es vordere und hintere Fixiereinrichtungen 14, 15 auf, mittels welcher die Abdeckung 2 in dem Fahrzeug fixiert wird. Diese können beispielsweise als ausfahrbare oder starre Stifte ausgebildet sein.

In den Figuren 3 bis 9 ist dargestellt, wie ein Rahmen für ein Schott, insbesondere ein Windschott, erfindungsgemäß hergestellt werden kann. Es kann sich hierbei um den Windschottrahmen 6 und/oder den Rahmen 13 der Abdeckung 2 handeln.

In der Figur 3 ist ein lineares hohles Profilelement 9 dargestellt, welches als Kunststoff-Extrusionsprofil ausgebildet ist. Diese Art der Herstellung ist kostengünstig und erspart bei konsequenter Anwendung für die linearen Abschnitte eines Schotts die bekannten aufwändigen Biegevorgänge von beispielsweise Aluminiumprofilen.

Das Profilelement 9 gemäß der Figur 3 weist ein U-förmiges Profil auf, wobei eine Hohlrinne 17 an der Profiloberseite mittig vorgesehen ist.

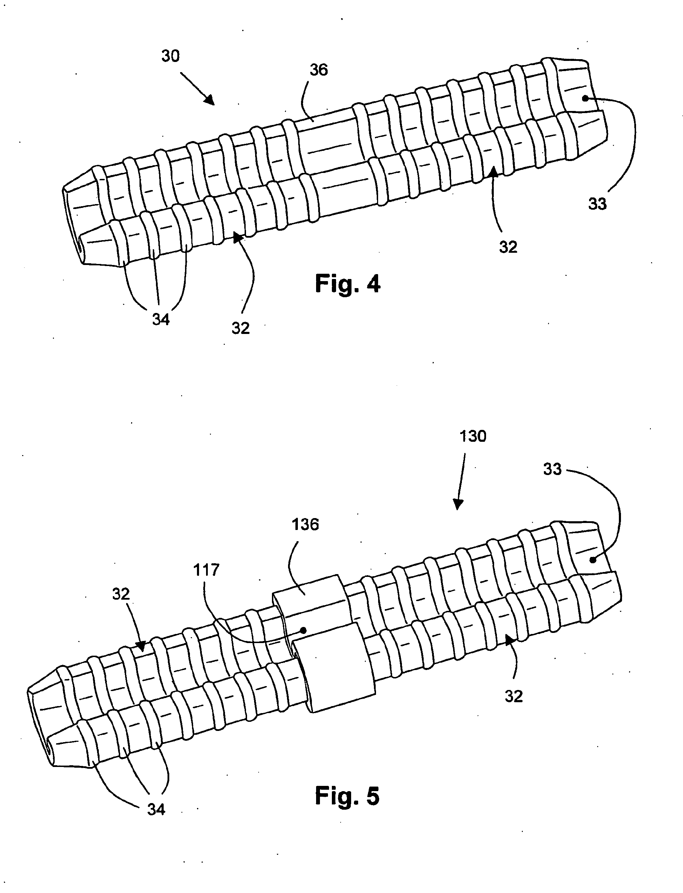

In den Figuren 4 und 5 sind zwei verschiedene Ausführungsformen von erfindungsgemäßen Steckverbindern, die ebenfalls Profilelemente darstellen, abgebildet. Der Steckverbinder 30 gemäß der Figur 4 weist einen Mittelabschnitt 36 auf, an den sich beiderseitig gleich ausgebildete Steckabschnitte 32 einstückig angeformt anschließen. Die Steckabschnitte 32 sind an ihren freien Enden 33 leicht konisch ausgeformt. Am Außenumfang der Steckabschnitte 32 sind umlaufende, in Längserstreckung der Steckabschnitte 32 beabstandete Rippen 34 vorgesehen.

Der Steckverbinder 130 gemäß der Figur 5 unterscheidet sich von demjenigen der Figur 4 darin, dass sein Mittelabschnitt 136 dicker ausgebildet ist und die Steckabschnitte 32 in Radialrichtung allseitig überragt. Dieser Mittelabschnitt 136 ist bei beidseitig in Hohlprofilelemente eingeschobenem Steckverbinder 130 stets sichtbar. Er kann beispielsweise umfangseitig ein elastisches Element aufweisen, das an den darunter liegenden Grundkörper des Steckverbinders 130 angespritzt ist. Gemäß einer Alternative wird das elastische Element von einem separaten Bauteil gebildet, das auf den Grundkörper des Steckverbinders 32 aufgeclipst ist. Die Elastizität gewährleistet nach Relaxierung im Anschluss an das Verstecken einen gleichmäßigen Fugenverlauf zwischen den hohlen Profilelementen 9, 19 und dem Steckverbinder 130. Bei einer weiteren, nicht dargestellten Alternative kann der Mittelabschnitt aus starrem Kunststoff bestehen und an beiden seiner Stirnseiten elastische Kunststoffringe aufweisen.

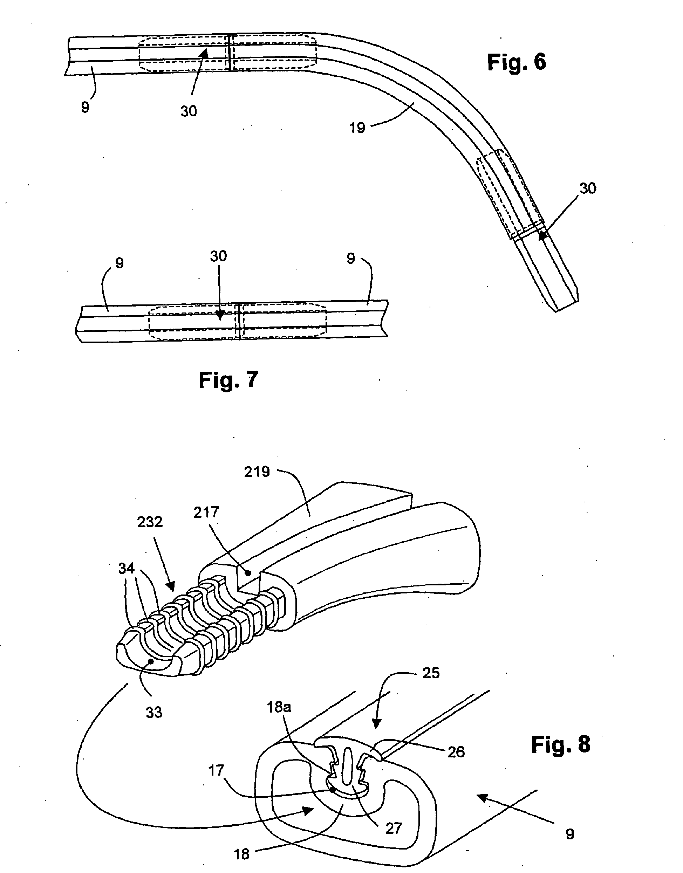

In der Figur 6 ist ein Beispiel dargestellt, bei dem in beide Stirnseiten eines hohlen Eckprofilelements 19 je ein Steckverbinder 30 (s. Figur 4) eingesteckt ist. Während der Steckverbinder 30 an dem einen Ende des Eckprofilelements 19 herausragt, ist auf den anderen Steckverbinder 30 ein lineares hohles Profilelement 9 aufgeschoben. Es ist deutlich zu erkennen, dass der Steckverbinder 30 vollständig in den beiden Profilelementen 9, 19 verschwindet.

Eine ähnliche Situation ist in der Figur 7 dargestellt. Hier sind zwei linear hohle Profilelemente 9 mittels eines Steckverbinders 30 verbunden.

Die Figur 8 zeigt, wie ein Eckprofilelement 219 mit einstückig angeformtem Steckabschnitt 232 in ein lineares hohles Profilelement 9 eingeführt wird. Das U-Profil des Steckabschnitts 232 entspricht dem inneren Profil des Profilelements 9. Die Rippen 34 legen sich kraftschlüssig an die Innenwand des Profilelements 9 an.

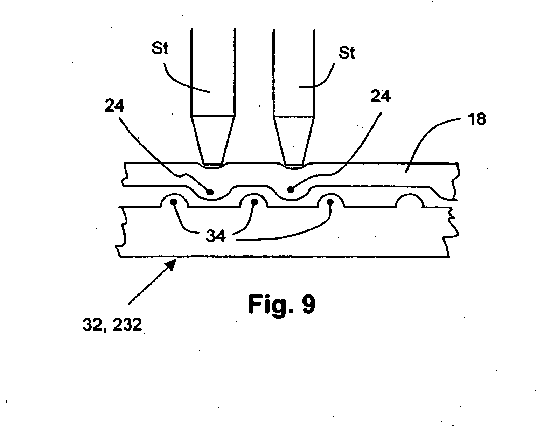

In der Figur 9 ist ein Verfahren zum Verbinden von Steckabschnitten 32, 232 mit hohlen Profilelementen 9, 19 dargestellt. In diesem Fall müssen die Profilelemente 9, 19, welche die Steckabschnitte 32, 232 aufnehmen, aus einem bei Druckapplikation plastisch verformbaren Werkstoff bestehen, vorzugsweise aus Aluminium oder Stahl. Bei dem erfindungsgemäßen Verfahren werden ein oder mehrere nebeneinander angeordnete Druckstempel St in die Hohlrinne 17 eingeführt und gegen die Wand 18 gepresst, so dass in dieser Einbuchtungen 24 entstehen, die vorzugsweise wiederum mit den Rillen 34 zahnartig ineinandergreifen.

Bei der Verpressung gemäß der Figur 9 ist es wegen der gelungeneren Optik von Vorteil, die Energie mittels der Druckstempel St im Bereich der Hohlrinne 17 einzubringen. Im Anschluss an diese Verpressung wird bevorzugt eine Kunststofflippe 25 in die Hohlrinne 17 - und in die Hohlrinne des benachbarten Profilelements - eingedrückt (s. Figur 8), welche beidseitig überstehende, breite Randabschnitte 26 aufweist und somit für einen geschlossenen optischen Eindruck sorgt. Die Lippe 25 weist zur stabilen Lagerung in der Hohlrinne 17 einen gezackten bzw. mit Widerhaken versehenden Längszapfen 27 auf, der in korrespondierende Zahnabschnitte 18a an den Seitenwänden der Hohlrinne 17 eingreift.

Selbstverständlich ist es auch möglich, die Energie auch an anderen Stellen als in den Hohlrinnen 17 einzubringen.

Die Erfindung ist nicht auf das dargestellte Ausführungsbeispiel eines Windschotts beschränkt. So ist die Erfindung beispielsweise auch bei Sonnenschotts einsetzbar. Weitere Abwandlungen im Rahmen der Patentansprüche fallen ebenfalls unter die Erfindung.

## Patentansprüche

1. Verfahren zur Herstellung eines Rahmens (6; 13) für ein Schott (1) für ein Personenkraftfahrzeug mit folgenden Verfahrensschritten:
- Es werden Profilelemente (30; 130; 219), die zumindest an einem Ende, vorzugsweise beiden Enden, einen vorstehenden Steckabschnitt (32; 232) aufweisen, in hohle Profilelemente (9; 19) eingeschoben,
- es werden anschließend durch maschinelle Energieeinbringung auf einen Umfangsabschnitt die hohlen Profilelemente (9; 19) und die Steckabschnitte (32; 232) miteinander verbunden, wobei der folgende Verfahrensschritt durchgeführt wird:
mindestens ein außen liegender Abschnitt (18) eines im Wesentlichen aus Metall bestehenden hohlen Profilelements (9; 19) wird an einem Umfangsabschnitt derart verpresst, dass hierdurch mindestens eine lokale plastische Verformung unter Bildung einer Einbuchtung (24) entsteht, die mit dem gegenüberliegenden Steckabschnitt (32; 232) zusammenwirkt, wobei die Einbuchtungen (24) in einer Hohlrinne (17) des hohlen Profilelements (9; 19) erzeugt werden.

2. Verfahren nach Anspruch 1, **dadurch gekennzeichnet, dass** die Einbuchtungen (24) zwischen umfangseitige Erhebungen (34) der Steckabschnitte (32; 232) eingreifen.

3. Verfahren nach einem der vorhergehenden Ansprüche, **dadurch gekennzeichnet, dass** der oder die Schottrahmen (6; 13) aus Profilelementen (9, 19; 219; 30; 130) zusammengesteckt werden, der oder die Rahmen (6; 13) in eine Aufnahme eingelegt werden und zumindest mehrere der gesteckten Profilelemente (9, 19; 219; 30; 130) gemäß einem der vorhergehenden Ansprüche miteinander verbunden werden.

4. Schott für ein Personenkraftfahrzeug, umfassend zumindest einen Rahmen (6; 13), der insbesondere nach einem der vorhergehenden Verfahrensansprüche hergestellt ist, und eine am Rahmen (6; 13) befestigte Flachmaterialbahn (10), wobei der Rahmen (6; 13) aus Profilelementen (9, 19; 219; 30; 130) aufgebaut ist, wobei zumindest zwei Profilelemente (9, 19; 219; 30; 130) miteinander versteckt sind, wobei im Bereich der Versteckung das eine Profilelement (9; 19) das andere Profilelement (30; 130; 219) umgreift, **dadurch gekennzeichnet, dass** das umgreifende Profilelement (9; 19) in einer Hohlrinne (17) nach innen gerichtete lokale Einbuchtungen (24) aufgrund von mechanischer Verpressung aufweist, wobei die beiden Profilelemente (9, 19; 219; 30; 130) mittels der Einbuchtungen (24) miteinander verbunden sind, insbesondere verzahnt.

5. Schott nach Anspruch 4, **dadurch gekennzeichnet, dass** die Einbuchtungen (24) zwischen umfangseitige Erhebungen (34) des Steckabschnitts (32; 232) des umgriffenen Profilelements (30; 130; 219) eingreifen.

6. Schott nach Anspruch 4 oder 5, **dadurch gekennzeichnet, dass** sowohl das hohle Profilelement (9; 19) als auch der Steckabschnitt (32; 232) des anderen Profilelements (30; 130; 219) zumindest in deren Verbindungsbereich miteinander korrespondierend U-förmig ausgebildet sind, und dass die Einbuchtungen (24) in den Senken dieser U-förmige Bereiche vorgesehen sind.

7. Schott nach einem der Ansprüche 4 bis 6, **dadurch gekennzeichnet, dass** eine Kunststofflippe (25) in ineinander übergehende Hohlrinnen (17; 217) der beiden miteinander verbundenen Profilelemente (9, 19; 219; 30; 130) zur optischen Abdeckung der Einbuchtungen (24) eingebracht ist.

8. Schott nach einem der Ansprüche 4 bis 7, **dadurch gekennzeichnet, dass** ein gebogenes Eckprofil (219) einen Steckabschnitt (232) aufweist, der mit einem hohlen Linearprofil (19) versteckt und verpresst ist.

9. Schott nach einem der Ansprüche 4 bis 7, **dadurch gekennzeichnet, dass** die die vorstehenden Steckabschnitte (32; 232) aufweisenden Profilelemente (30; 130) als Steckverbinder ausgebildet sind, die zwei hohle Profilelemente (9; 19) miteinander verbinden.

## Claims

1. A method for producing a frame (6; 13) for a deflector (1) for a passenger vehicle, having the following method steps:
- profile elements (30; 130; 219) which have a projecting plug section (32; 232) at least on one end, preferably on both ends, are inserted into hollow profile elements (9; 19),
- subsequently, the hollow profile elements (9; 19) and the plug sections (32; 232) are connected to one another by the automatic introduction of energy on a peripheral section, wherein the following method step is performed: at least one outer section (18) of a hollow profile element (9; 19) composed substantially of metal is compressed at a peripheral section in such a way that at least one local plastic deformation results, forming an indentation (24) that interacts with the opposite plug section (32; 232), wherein the indentations (24) are created in a hollow groove (17) of the hollow profile element (9; 19).

2. The method according to Claim 1, **characterized in that** the indentations (24) engage between elevations (34) on the peripheral side of the plug sections (32; 232).

3. The method according to one of the preceding claims, **characterized in that** the deflector frame(s) (6;13) are plugged together from profile elements (9, 19; 219; 30; 130), the frame(s) (6; 13) are inserted in a receptacle and at least some of the plugged profile elements (9, 19; 219; 30; 130) are connected to one another according to one of the preceding claims.

4. A deflector for a passenger vehicle, comprising at least one frame (6; 13) that is produced in particular according to one of the preceding method claims and a flat material web (10) fastened to the frame (6; 13), the frame (6; 13) being assembled from profile elements (9, 19; 219; 30; 130), at least two profile elements (9, 19; 219; 30; 130) being plugged into one another, and one profile element (9; 19) encompassing the other profile element (30; 130; 219) in the area of the plug connection, **characterized in that** due to mechanical compression the encompassing profile element (9; 19) has local indentations (24) locally directed inwards in a hollow groove (17), wherein the two profile elements (9, 19; 219; 30; 130) are connected to one another, in particular, intermeshed, by means of the indentations (24).

5. The deflector according to Claim 4, **characterized in that** the indentations (24) engage between elevations (34) on the peripheral side of the plug section (32; 232) of the encompassed profile element (30; 130; 219).

6. The deflector according to Claim 4 or 5, **characterized in that** both the hollow profile element (9; 19) and the plug connector section (32; 232) of the other profile element (30; 130; 219) are U-shaped and correspond to one another, at least in their connecting area, and that the indentations (24) are provided in the depressions of these U-shaped areas.

7. The deflector according to one of Claims 4 to 6, **characterized in that** for visual covering of the indentations (24), a plastic lip (25) is introduced into hollow grooves (17; 217) of the two profile elements (9, 19; 219; 30; 130) that are connected to one another, said grooves merging together.

8. The deflector according to one of the Claims 4 to 7, **characterized in that** a curved corner profile (219) has a plug section (232) which is plugged into and pressed with a hollow linear profile (19).

9. The deflector according to one of the Claims 4 to 7, **characterized in that** the profile elements (30; 130) having the projecting plug sections (32, 232) are constructed as plug connectors that connect two hollow profile elements (9; 19) to one another.

## Revendications

1. Procédé pour la fabrication d'un cadre (6; 13) pour une cloison (1) pour une voiture particulière comprenant les étapes de procédé suivantes :
- des éléments profilés (30; 130; 219) comportant au moins à une extrémité, de préférence aux deux extrémités, une section d'emboîtement en saillie (32, 232), sont insérés dans des éléments profilés creux (9, 19),
- ensuite, par apport mécanique d'énergie, les éléments profilés creux (9; 19) et les sections d'emboîtement (32; 232) sont connectés les uns aux autres en une section circonférentielle, sachant que l'étape de procédé suivante est effectuée: au moins une section extérieure (18) d'un élément profilé creux (9; 19) constitué essentiellement de métal est comprimée en une section circonférentielle de telle manière qu'il se forme ainsi au moins une déformation plastique locale accompagnée de la formation d'un enfoncement (24), qui concourt avec la section d'emboîtement opposée (32; 232), sachant que les enfoncements (24) sont réalisés dans une gorge creuse (17) de l'élément profilé creux (9; 19).

2. Procédé selon la revendication 1, **caractérisé en ce que** les enfoncements (24) se mettent en prise entre des surélévations circonférentielles (34) des sections d'emboîtement (32; 232).

3. Procédé selon l'une quelconque des revendications précédentes, **caractérisé en ce que** le/les cadre(s) de cloison (6; 13) est/sont assemblé(s) par emboîtement d'éléments profilés (9, 19; 219; 30; 130), le/les cadre(s) (6; 13) est/sont inséré(s) dans un logement et plusieurs au moins des éléments profilés emboîtés (9, 19; 219; 30; 130) sont connectés les uns aux autres selon l'une quelconque des revendications précédentes.

4. Cloison pour une voiture particulière, comportant au moins un cadre (6; 13), qui est fabriqué particulièrement selon l'une quelconque des revendications de procédé précédentes, et une bande de matériau plat (10) fixée au cadre (6; 13), sachant que le cadre (6; 13) est constitué d'éléments profilés (9, 19; 219; 30; 130), que deux éléments profilés (9, 19; 219; 30; 130) au moins sont emboîtés l'un dans l'autre, que, dans la zone d'emboîtement, l'un des éléments profilés (9; 19) enveloppe l'autre élément profilé (30; 130; 219), **caractérisée en ce que** l'élément profilé enveloppant (9; 19) présente des enfoncements locaux (24) dirigés vers l'intérieur dans une gorge creuse (17) en raison d'une compression mécanique, sachant que les deux éléments profilés (9, 19; 219; 30; 130) sont connectés l'un à l'autre, en particulier engrenés, au moyen des enfoncements (24).

5. Cloison selon la revendication 4, **caractérisée en ce que** les enfoncements (24) se mettent en prise entre des surélévations circonférentielles (34) de la section d'emboîtement (32; 232) de l'élément profilé (30; 130; 219) enveloppé.

6. Cloison selon la revendication 4 ou 5, **caractérisée en ce que** aussi bien l'élément profilé creux (9; 19) que la section d'emboîtement (32; 232) de l'autre élément profilé (30; 130; 219) se présentent sous une forme en U réciproquement correspondante au moins en leur zone de connexion et que les enfoncements (24) sont prévus dans les dépressions de ces zones de forme en U.

7. Cloison selon l'une quelconque des revendications 4 à 6, **caractérisée en ce qu'**une lèvre en matière plastique (25) est insérée dans des gorges creuses (17; 217) se succédant l'une à l'autre des deux éléments profilés (9, 19; 219; 30; 130) connectés l'un à l'autre pour la dissimulation optique des enfoncements (24).

8. Cloison selon l'une quelconque des revendications 4 à 7, **caractérisée en ce qu'**un profilé angulaire courbé (219) présente une section d'emboîtement (232) qui est emboîtée ou compressée avec un profilé linéaire creux (19).

9. Cloison selon l'une quelconque des revendications 4 à 7, **caractérisée en ce que** les éléments profilés (30; 130) comportant les sections d'emboîtement en saillie (32; 232) se présentent sous la forme de connecteurs enfichables, qui connectent l'un à l'autre deux éléments profilés creux (9; 19).
